# EUROPEAN PATENT SPECIFICATION

(11) **EP 2 946 531 B1**
(45) Date of publication and mention of the grant of the patent: **31.03.2021**
(21) Application number: 13872124.6
(22) Date of filing: 18.01.2013
(51) Int. Cl.: H04W 4/08, H04W 4/70

(54) **DYNAMIC GROUP PROVISIONING**
BEREITSTELLUNG EINER DYNAMISCHEN GRUPPE
APPROVISIONNEMENT DYNAMIQUE DE GROUPE

(43) Date of publication of application: 25.11.2015
(73) Proprietor: Nokia Solutions and Networks Oy, 02610 Espoo (FI)
(72) Inventor: CHANDRAMOULI, Devaki, Plano, TX 75074 (US); LIEBHART, Rainer, 81476 Munich (DE)
(74) Representative: TBK
(86) International application number: PCT/US2013/022052
(87) International publication number: WO 2014/113011

(56) References cited:
- EP-A1- 2 480 013
- WO-A1-2012/135680
- US-A1- 2009 292 799
- US-B1- 7 769 009
- "3rd Generation Partnership Project; Technical Specification Group Services and System Aspects; Machine-Type and other Mobile Data Applications Communications Enhancements (Release 12)", 3GPP STANDARD; 3GPP TR 23.887, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.6.0, 18 December 2012 (2012-12-18), pages 1-95, XP050691121, [retrieved on 2012-12-18]
- ZTE: "MTC Group ID considerations", 3GPP DRAFT; S2-123115_MTC GROUP ID CONSIDERATION-R2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Barcelona, Spain; 20120709 - 20120713, 10 July 2012 (2012-07-10), XP050633615, [retrieved on 2012-07-10]

## Description

### BACKGROUND:

### Field:

Communication systems, such as an evolved packet system, may benefit from methods for providing dynamic provisioning of group relevant data. In particular, certain communication systems in which machine type communication and devices used for public safety communication are deployed may benefit from a feature for providing dynamic group provisioning.

### Description of the Related Art:

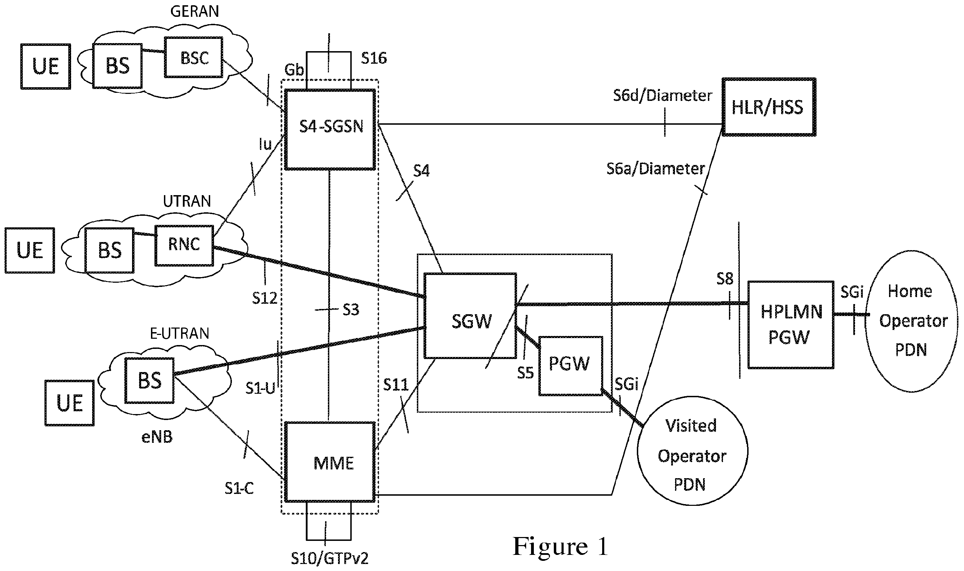

The evolved packet system (EPS), the successor of general packet radio system (GPRS), provides radio interfaces and packet core network functions for broadband wireless data access. EPS core network functions include the mobility management entity (MME), the packet data network gateway (PDN-GW) and the Serving Gateway (S-GW). An example of an evolved packet core architecture is illustrated in Figure 1 and is described by third generation partnership project (3GPP) technical specification (TS) 23.401, which is incorporated herein by reference in its entirety. A common packet domain core network can be used for both radio access networks (RANs), the global system for mobile communication (GSM) enhanced data rates for GSM evolution (EDGE) radio access network (GERAN) and the universal terrestrial radio access network (UTRAN).

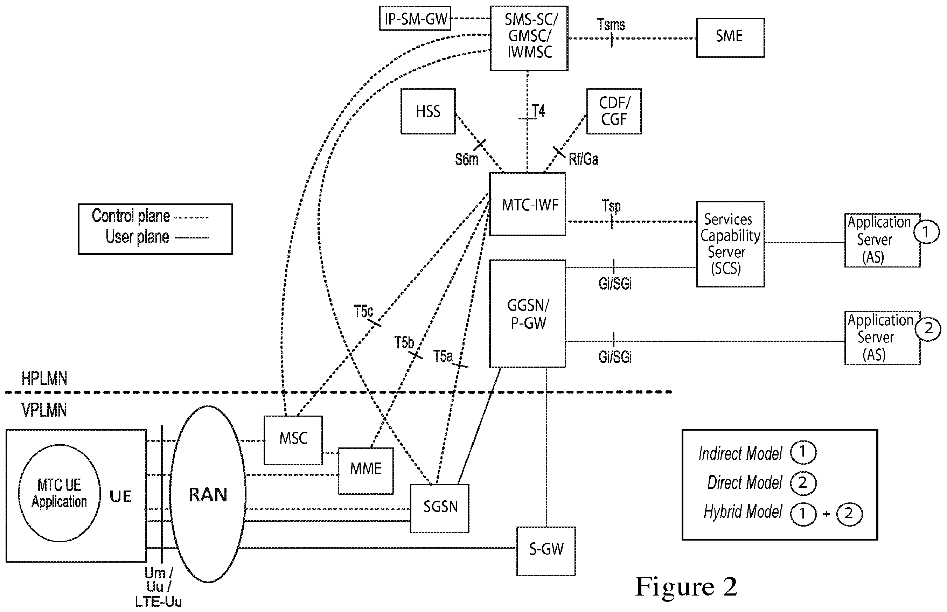

For machine-type-communication (MTC) a functional entity called MTC interworking function (MTC-IWF) and several new interfaces, including S6m, Tsp, Tsms, T5a/b/c and T4, have been introduced to the 3GPP architecture. Figure 2 illustrates machine-type-communication additions to the 3GPP architecture, as well as the various interfaces identified. The MTC-IWF and the new interfaces in 3GPP Release 11 (Rel 11) can, for example, enable triggering of devices with or without a mobile subscriber integrated services digital network number (MSISDN) from an internal or external MTC server. The triggering of the devices may be, for example, in order to establish a packet data network (PDN) connection and/or packet data protocol (PDP) context. A 3GPP architecture for machine-type communication is discussed in 3GPP TS 23.682, which incorporated herein by reference in its entirety.

A default assumption in 3GPP is that there is an agreement between operator and service provider. Moreover, the operator maintains groups in the HSS or wherever needed. There is no conventional way to assign users to different groups dynamically.
WO 2012/135680 A1 discloses a wireless transmit/receive unit (WTRU) sending a request to establish or modify a PDP context. The request to establish or modify the PDP context may include an indication that the WTRU is a member of shared context group.
EP 2 480 013 A1 discloses setting groups including group terminals in both an M2M platform and an application platform, wherein there are correspondences between groups in the M2M platform and the application platform.
3GPP TR 23.887, v0.6.0 discloses Group Based Features including Group based Messaging, Group based Charging Optimizations, Group based Policy Control, and Group based Addressing and Identifiers.
3GPP SA WG2 Meeting #92,S2-123115 (revision of S2-122850), 9-13 July 2012 - Barcelona, Spain discloses indicating that a trigger is for group trigger in which a Group ID is included in a trigger message and also discloses that a trigger message includes a Trigger-Type IE to indicate whether the trigger is for group or individual.

### SUMMARY:

According to a first embodiment, there is defined a method according to claim 1.

According to a second embodiment, there is defined a method according to claim 5.

An apparatus, according to a third embodiment, is defined according to claim 10.

An apparatus, according to a fourth embodiment, is defined according to claim 11.

A non-transitory computer-readable according to fifth and sixth embodiments is encoded with instructions that, when executed in hardware, perform a process, the process comprising the method according to respectively the first and second embodiments, discussed above.

According to a seventh embodiment, a system includes an apparatus according to the third embodiment and an apparatus according to the fourth embodiment.

### BRIEF DESCRIPTION OF THE DRAWINGS:

For proper understanding of the invention, reference should be made to the accompanying drawings, wherein:
Figure 1 illustrates an evolved packet core architecture.
Figure 2 illustrates machine-type-communication additions to a third generation partnership project architecture.
Figure 3 illustrates dynamic grouping triggered by a user equipment, according to certain embodiments.
Figure 4 illustrates dynamic grouping triggered by a services capabilities server, according to certain embodiments.
Figure 5 illustrates provisioning a group identifier or external ID in a device using OMA-DM, according to certain embodiments.
Figure 6 illustrates method according to certain embodiments.
Figure 7 illustrates a system according to certain embodiments.

### DETAILED DESCRIPTION:

In third generation partnership project (3GPP) Release 12 (Rel-12), group features such as group policing, group charging, group messaging, group based usage monitoring may be included. Group based communication may be applied to address public safety use cases. Minimum size of a group may be around 100 or 1000 users and the size of the group can be left up to operator policies. For some use cases, static grouping in the home subscriber server (HSS) may be sufficient, such as for grouping smart phone users in a family plan.

However, for use cases that involve a service provider owning millions of devices, static grouping may be cumbersome and a labor intensive process; not to mention the associated cost and human errors that may be associated with it. Thus, certain embodiments may provide dynamic provisioning methods that can be automated in a system to create groups dynamically.

For public safety use cases, a requirement for dynamic grouping may be valuable as the controller may want to group different set of users as critical subscribers depending on the event that is ongoing. For example, in some cases and in some areas, such as catastrophe areas where there is rioting, police may be more important than fire fighter or rescuer. In other cases, the rescuers are more important than policemen, and there may be cases when a few selected members of each group are more important than others, such as those who have been at the scene the longest. In a particular embodiment, for example, a command center with a commander who oversees this mission can be permitted to ensure that his selected team members, for example a core group of elite members, will have the highest chance of accessing and utilizing this public safety network. Those selected members can be grouped together dynamically.

Thus, certain embodiments broadly relate to automated methods for provisioning groups dynamically. More particularly, certain embodiments provide ways to automatically group devices, as well as to generate and provision the group identifier in the HSS and in an application server (AS). Certain embodiments provide a way to provision group identifier in the device for devices that need to know the device's own group identifier. Furthermore, certain embodiments provide or rely on rules and principles for shared identifier allocation and conditions for shared identifier re-allocation due to dynamic grouping.

There can be more than one way to automatically group devices and to generate and provision group identifiers within the network. According to a first option, application level information needed for group formation can be sent to the network by the user equipment (UE) itself. To minimize impact to existing network elements, such application level information can be sent transparently to the network. According to a second embodiment, application level information needed for group formation is sent to the network by a services capability server (SCS) / application server (AS).

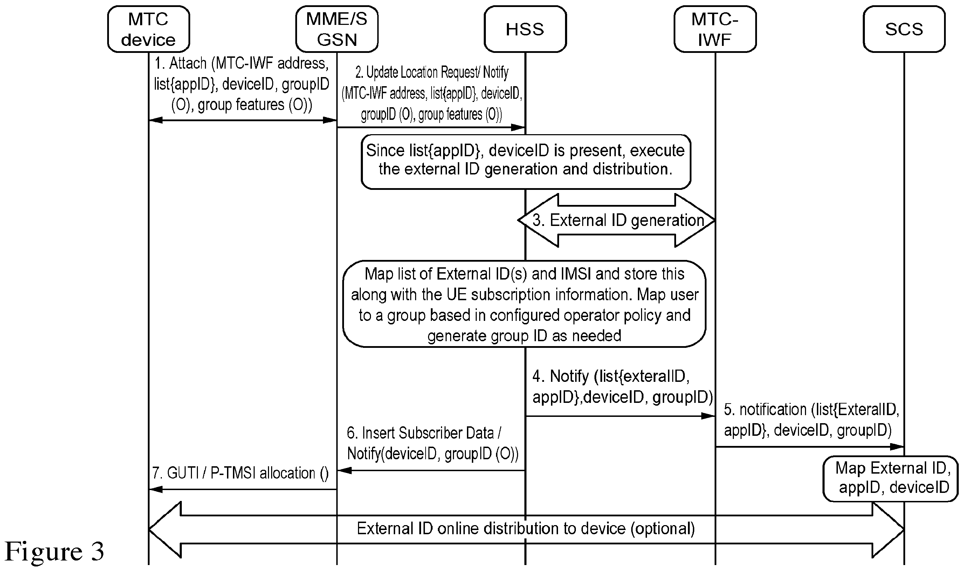

Figure 3 illustrates dynamic grouping triggered by a user equipment, according to certain embodiments. As shown in Figure 3, at 1 the user equipment can initiate an attach procedure with the network. During the process, the network may provide additional information such as MTC-IWF / SCS / application server address to the device. Also, if the UE needs to request an external ID for its applications, it can provide a list of appID along with the device ID to the network. If the device is configured with the group ID, it may provide this. Alternatively, UE may provide the relevant features supported, such as, for example, group based messaging, communication, or the like. AppID can be an application layer identifier to identify the specific application(s) on the specific device which will communicate with SCS/AS on application layer over the PS connection. They are transparent to the network, only known by the application running in the UE, and SCS/AS. These parameters (MTC-IWF address, list {appID}, device ID) maybe conveyed in the PCO IE of the session setup procedure.

At 2, the mobility management entity (MME)/serving general packet radio service (GPRS) support node (SGSN) can provide an update location request / notify. The MME/SGSN can notify HSS of the list of appID, device ID, group ID, group features it received. With the presence of the list of appID, HSS can start the external ID generation and distribution process. If list {appID} is not present, HSS can wait, rather than immediately starting the process. This waiting may ensure that external ID will only be generated when explicitly requested by the UE.

At 3, the HSS and an interworking function (IWF) may generate an external ID and map international mobile subscriber identity (IMSI) to external ID. If group ID is present, the HSS can insert the group ID within the user's subscription to map the user to a group dynamically, with no manual provisioning needed. If group ID is not present, HSS can determine whether the user, or the user equipment, needs to belong to a group based on an operator's policy or requested by other means, for example, the service provider can instruct the mobile operator through a Web interface that certain UEs should belong to a group. HSS also determines which group it should belong to based on operator policies or based on external request. Criteria for forming groups at the IWF/HSS are discussed below. In general, various criteria can be used by the HSS/IWF to generate a group identifier and map users to a certain group.

At 4, the HSS can notify the IWF with the generated group ID and can include the list of 2-tuple {appID, externalID} as well as IMSI.

At 5, the MTC-IWF can send an indication to the SCS, which can be pre-configured, with the list of 2-tuple (appID, external identifier), device ID, and group ID. The SCS can store the mapping for later use. The SCS can inform the application server (AS) about device ID, appID, generated external ID, and group ID. The AS can then store extID together with the appID, device ID and group ID that is specific for the device. In order to trigger a certain application on a device, device ID and appID can be mapped to external ID. In order to trigger a group to which the device belongs to, the AS can use the group ID received.

At 6, the HSS can notify the MME / SGSN when the user is being mapped to a certain group for the first time. When there is a change in the mapping of group ID for a certain device, for example when UE 1 has been moved from group 1 to group 2, the HSS can notify the MME/SGSN of this change. This step can be valuable because the MME and SGSN may perform shared identifier allocation or shared identifier re-allocation for devices within the group when it is being mapped to a certain group for the first time to ensure successful group communication. For example, shared globally unique temporary identifier (GUTI) allocation can be performed in case of LTE, or shared P-TMSI allocation can be performed in case of 2G/3G, as discussed below with respect to rules that can be adopted for allocating shared identifiers.

At 7, when there is a new mapping of a user to a certain group, the MME/SGSN can allocate a shared identifier for the device that is currently being registered. When there is change in the mapping of group ID for a certain device, the MME/SGSN can re-allocate the shared identifier for all the devices within the group. This can be done either as part of Attach Accept or TAU (Tracking area update accept) or independently, for example, using a GUTI reallocation command. When group communication is performed, UE 1 that moved from Group 1 to Group 2 should no longer receive group messages targeted for Group 1 and this may involve paging some devices that are in the idle mode. The group messages can include, for example, group paging or group messaging. Otherwise, if dynamic group change is not performed, the MME/SGSN may not re-allocate shared identifiers until at least one device that belongs to certain group is registered with that MME/SGSN.

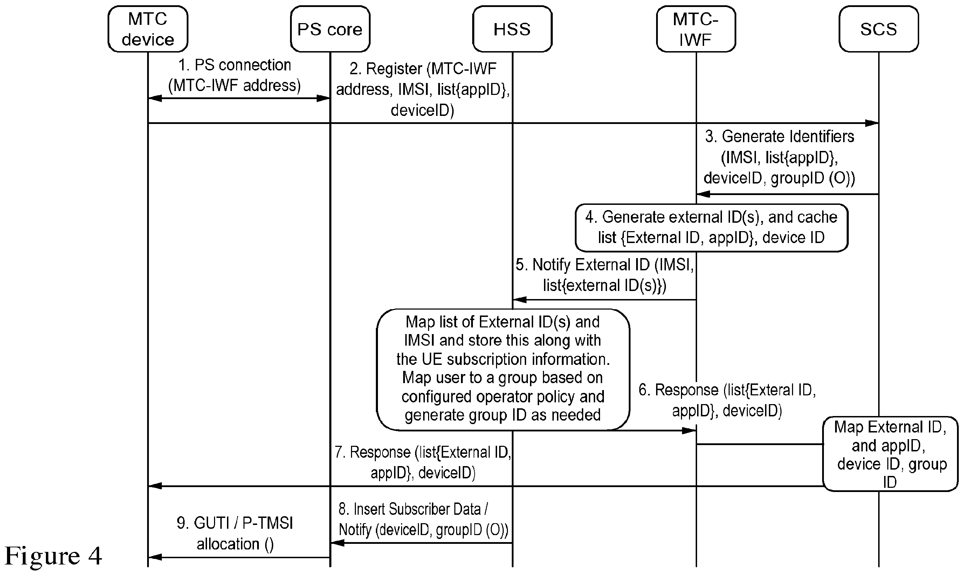

Figure 4 illustrates dynamic grouping triggered by a services capabilities server, according to certain embodiments. As shown in Figure 4, at 1 a UE can initiate an attach procedure with the network. During the process, the network may provide additional information such as MTC-IWF/SCS/AS address to the device.

At 2, on an application layer, the MTC device can register to the SCS using, for example, a default bearer that allows only communication with this SCS. IMSI can be contained in the message to identify the requesting UE. Alternatively an IPv6 address can be used for this purpose, or any other network layer identifier (device ID) which can uniquely identify the UE. A list of appID(s) for which external ID(s) need to be allocated, and the device ID that uniquely identifies the device is contained in the message. Optionally, MTC-IWF address is contained so that SCS can know the destination of the message at 3.

At 3, the SCS can send a "generate identifiers" request to the MTC-IWF. The network layer identifier of the MTC device and the list of appID can be contained in the request. The network layer identifier may be, for example, IMSI, IPv6 address, or any other device ID.

At 4, the MTC-IWF can generate a new external identifier for each appID in the list.

Then, at 5, the MTC-IWF can notify the HSS of the list of newly generated external identifiers. The HSS can then map the list to the corresponding IMSI. If a group ID is present, the HSS can insert the group ID into the user's subscription data to map the user to a group dynamically, with no manual provisioning needed. If group ID is not present, the HSS can determine whether a user needs to belong to a group based on an operator's policy or based on an external request from an application service provider. The HSS can also determine which group it should belong to based on operator policies or external request. Criteria for forming groups at the IWF/HSS are discussed below. As discussed below, various criteria can be used by the HSS/IWF to generate group identifier and map users to a certain group.

At 6, the HSS can sends an indication via MTC-IWF to the SCS with the list of 2-tuple (appID, external identifier). The SCS can store the mapping for later use.

At 7, in response to the request at 2, the SCS can optionally notify the MTC device with the list of generated external ID(s) for each appID.

At 8, the HSS can notify the MME / SGSN when the user is being mapped to a certain group for the first time. When there is a change in the mapping of group ID for a certain device, for example when UE 1 has been moved from group 1 to group 2, the HSS can notify the MME/SGSN of this change. This step may be valuable, because the MME and SGSN may perform shared identifier allocation or shared identifier re-allocation for devices within the group when it is being mapped to a certain group for the first time to ensure successful group communication. For example, shared GUTI allocation can be performed in case of LTE, or shared P-TMSI allocation can be performed in case of 2G/3G, as discussed below with respect to rules that can be adopted for allocating shared identifiers.

At 9, when there is a new mapping of user to a certain group, the MME/SGSN can allocate shared identifier for the device that is currently being registered. When there is change in the mapping of group ID for a certain device, the MME/SGSN can re-allocate the shared identifier for all the devices within the group. This can be done either as part of Attach Accept or TAU (Tracking area update accept) or independently, for example, using a GUTI reallocation command. Thus, for example, when group communication is performed, UE 1 that moved from Group 1 to Group 2 may no longer be supposed to receive group messages, such as group paging or group messaging, targeted for Group 1, and this may involve paging some devices that are in the idle mode. Otherwise, if dynamic group change is not performed, the MME/SGSN may not re-allocate shared identifiers until at least one device that belongs to certain group is registered with that MME/SGSN.

The above options may both include that the SCS/AS can notify the device with the generated external ID and optionally the generated group ID. Moreover, in both of the above options, the presence of the MTC-IWF is optional and, thus, may not be required for deployment for public safety network. When MTC-IWF is not present, the HSS may have direct communication with the SCS/AS.

As mentioned above, various criteria can be used for forming groups at the HSS/IWF. For example, the UE / SCS or application server can provide group ID that the UE should belong to in the request, for example, if the UE / SCS/ AS already has that information. For instance, in case of public safety groups, SCS or application server could be the controller initiating the dynamic grouping via some web based interface. If group ID is provided, then IWF/HSS can use the group ID and perform the mapping dynamically.

Otherwise, IWF/HSS can use some pre-configured policies to identify whether new group ID should be generated or not, such as whether the UE should belong in a group or not or whether a group that the UE should belong to, already exists based on some pre-defined criteria.

The policies and the criteria can be based on application ID (application running in the UE), service provider ID, features that the user is subscribed to, features that the UE supports, the location of the UE, or any combination thereof. The features that the user is subscribed to can include group policing / messaging and the like. If the operator policy is to assign groups purely based on features supported, then the HSS can simply use the features the UE supports or the features the user is subscribed in order to form a feature specific group, such as a policy group, a messaging group, and a charging group.

Automatic provisioning of group identifier in the device can be accomplished various ways. For example, a group identifier can be generated either online, using the method described above, or offline using a traditional manual provision. This group identifier, however generated, can be provisioned in the device via OMA-DM or OTA, or by any application layer mechanism.

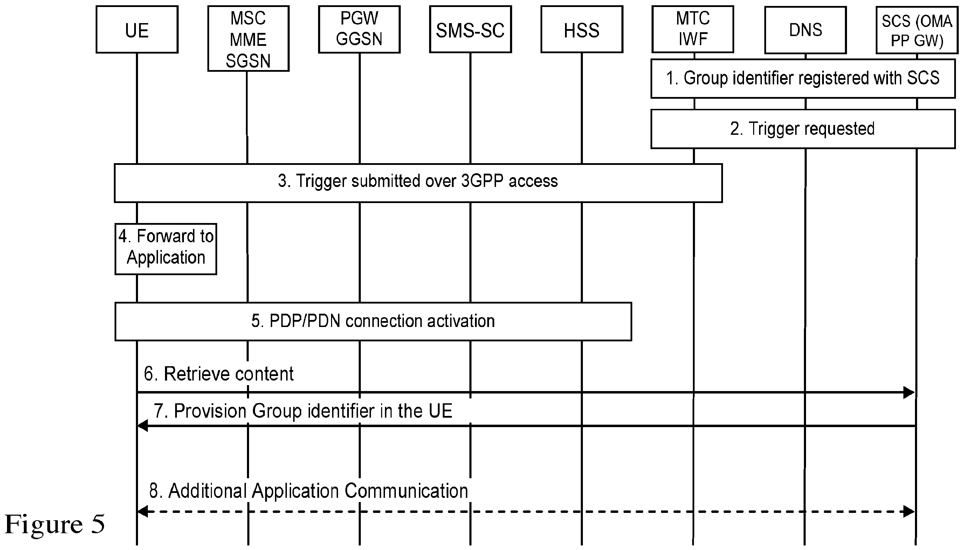

Figure 5 illustrates provisioning a group identifier or external ID in a device using OMA-DM, according to certain embodiments. As shown in Figure 5, at 1, a group ID that has been generated offline or online using the mechanism described above can be provisioned in the SCS, which is acting as a OMA DM push proxy gateway.

At 2, the OMA DM push proxy gateway can communicate with the IWF to trigger the device using external identifier. Then, at 3, the IWF can submit the device trigger request over 3gpp access.

At 4, the UE can receive the trigger and forward the trigger to the appropriate application. Moreover, at 5, the triggered application can process the trigger and trigger the establishment of a PDN connection. Likewise, at 6, the UE can initiate communication with the push proxy gateway to obtain content.

At 7, the push proxy gateway can provision the device with an external identifier along with other parameters. Later, at 8, additional application communication may happen depending on the content received.

Ensuring generation of globally unique group identifier can be achieved in various ways. Group identifier generation explained above can be performed using a combination of app ID, which can be application specific, and domain ID, which can be operator specific. If the app ID contains operator's domain name or service provider's domain name encoded in some format (e.g. URI, NAI), the resulting group identifier will be globally unique.

Shared identifier allocation can be performed in more than one alternative. According to a first alternative a shared identifier can be allocated for 2G/3G.

In case of 2G / 3G, the shared identifier can be allocated to devices within the group. Either the packet temporary mobile subscriber identity (P-TMSI) can be modified or a new shared identifier can be used specifically for this purpose. There may be at least three options to allocate shared identifiers in the first alternative. The allocation can follow the corresponding rules described below.

According to a first option, modified rules can used for TMSI definition. The size of the TMSI can be 4 octets: TMSI = <bit 31 - bit 30>+<bit 29 - bit 24> + <NRI> + <bit 13 - bit 0>. Bits 30 - 31 can include 2 MSBs with values 00, 01, 10 used by the VLR; 11 used by the SGSN. Bits 9 - 0 can be assigned the same value for all groups, in order to derive the same paging occasion (PO) for all UE(s) that belong to any group. Bits 29 - 24 and bits 13 - 10 can be assigned the same value for all UE(s) that belong to a certain group. If 2 of these bits are assigned for a recovery counter, then it can be bits 30 - 29 or bits 10, 11 as an example.

Using existing definition of TMSI with modified semantics for the bits within the TMSI may permit only 6 + 2 = 8 bits that can be allocated for the "Group TMSI" = 256 groups in the SGSN area. This imposes a limitation on the number of groups allowed in an SGSN area.

According to a second option, rules for enhanced TMSI definition can include that the size of the TMSI is increased to 5 octets: TMSI = <bit 31 - bit 30>+<bit 37- bit 32> + <NRI> + <bit 21 - bit 0>. In this case, bits 30 - 31 can be 2 MSBs with values 00, 01, 10 used by the VLR and 11 used by the SGSN. Bits 9 - 0 can be assigned the same value for all groups - in order to derive the same paging occasion (PO)for all UE(s) that belong to any group. Moreover, Bits 29 - 24 and bits 13 - 10 can be assigned the same value for all UE(s) that belong to a certain group. If 2 of these bits are assigned for recovery counter, then the assigned bits may be bits 30 - 29 or bits 10, 11 as an example.

Modified TMSI could remove the restriction imposed by current TMSI and allow 6 + 2 + 8 = 16 bits that can be allocated for the "Group TMSI" = 65536 groups in the SGSN area.

According to a third option, rules for a new identifier definition can include that a new shared identifier is defined for 2G / 3G that follows the following rules. Two bits are allocated for identifying SGSN (MSB = 11), VLR (00, 01, 10), ten bits are allocated for NRI, four octets are available for group allocation, two bits are allocated for recovery counter, ten bits are assigned the same value for all groups to ensure same paging occasion (PO) for all UE(s) in the group, and twenty bits are available as shared space available for individual group identifiers (∼1M groups). This is just one example and any of the above rules could be omitted or altered to be a different number of bits.

Bit positions are not, in this option, constrained by existing TMSI definition. Thus, this option may provide additional flexibility in the number of contiguous bits / octets remaining for allocating groups. As mentioned above, 20 bits maybe available as shared space (∼1M groups).

In a second alternative, a shared identifier may be allocated for LTE. In case of LTE, shared GUTI can be allocated to devices in the group as follows: <Group-GUTI> = <MCC> + <MNC>+<MMEGI> + <MMEC> + <unique identifier within the MME>. The <unique identifier within the MME> can be of 32 bits in length. The 32 bits can be a shared space for M-TMSI and <unique identifier within the MME>. If two bits are allocated for recovery counter, then 2^30 identifiers are left that can be shared. Thus, the number of identifiers available that can be shared is quite large, for example, 5 Billion identifiers.

In case of LTE, shared S-TMSI can be allocated to devices in the group as follows: <Group-S-TMSI>= <MMEC> + <unique identifier within the MME>. The last 10 bits may be allocated the same value for all groups to ensure same paging occasion (PO) for all UE(s) in the group. The same principle could be applied for the last 10 bits of Group GUTI.

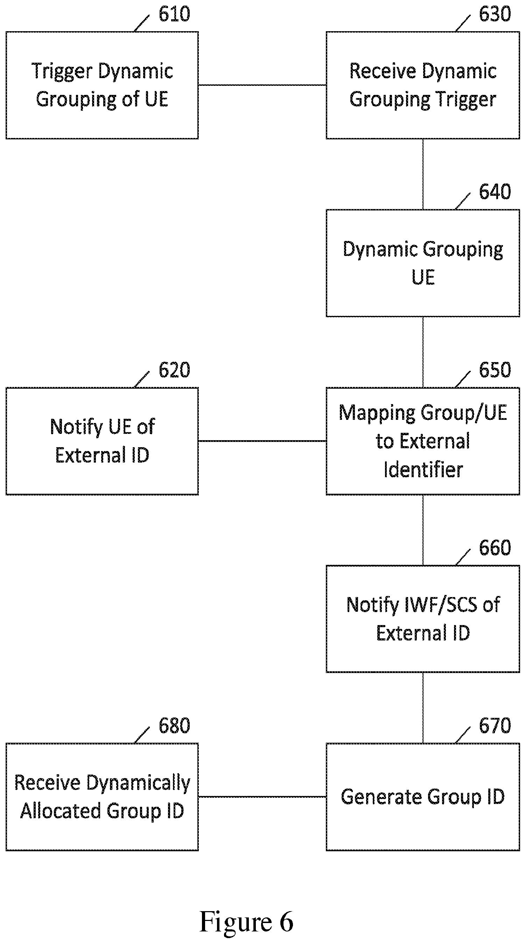

Figure 6 illustrates methods according to certain embodiments. The methods shown in Figure 6 can be performed by a variety of devices, such as the machine type communication device (MTC), devices used for public safety communication, which can be considered a user equipment, of Figures 3 and 4, the HSS of Figures 3 and 4, the MTC-IWF of Figures 3 and 4, and the SCS of Figure 3 and 4.

A method can include, at 610, triggering dynamic grouping of a user equipment to a group by the user equipment or by a services capability server. The triggering can be configured to trigger a network element to perform the dynamic grouping of the user equipment. The can be or include an explicit triggering by sending a group identifier from the user equipment or the services capability server or the application server. Alternatively, the triggering can be an implicit triggering by sending a list of supported features or supported applications.

The method can also include, at 620, notifying the user equipment of an external identifier corresponding to the group by a services capabilities server or application server.

Another method, which can be interrelated with the previous method, can include, at 630, receiving a trigger to perform dynamic grouping of a user equipment. The method can additionally, include, at 640, dynamically grouping the user equipment to a group in response to the trigger. The dynamically grouping is performed by an interworking function or a home subscriber server, although it can also be performed by other network elements.

The dynamic grouping can be based on at least one of a provided group identifier, a determination of whether a group suitable for the user equipment is already in existence, an application identifier of an application running in the user equipment, a service provider identifier, at least one feature to which a user of the user equipment is subscribed, a location of the user equipment, or at least one feature that the user equipment supports.

The method can additionally include, at 650, mapping the group, the user equipment, or both to an external identifier. The method can additionally include, at 660, notifying at least one of an interworking function or a services capabilities server or application server regarding the mapping. The services capabilities server or application server can be notified directly or indirectly by the network element that performed the mapping. In another embodiment, the services capabilities server or application server itself can perform the mapping.

The method can also include, at 670, generating a group identifier for the user equipment of the group, wherein the group identifier comprises at least one of a unique group identifier and a shared identifier. The unique group identifier can include a combination of an application identifier and a domain identifier. The methods can also include, at 680, receiving at the user equipment a notification of a dynamically allocated group identifier. The shared identifier can include at least one of a temporary mobile subscriber identity having modified semantics (such as the first option for 2G/3G shared identifier, discussed above), an enhanced temporary mobile subscriber identity (such as the second option for 2G/3G shared identifier, discussed above), a new shared identifier (such as the third option for 2G/3G shared identifier, discussed above), or a shared globally unique temporary identifier (such as the LTE shared identifier, discussed above).

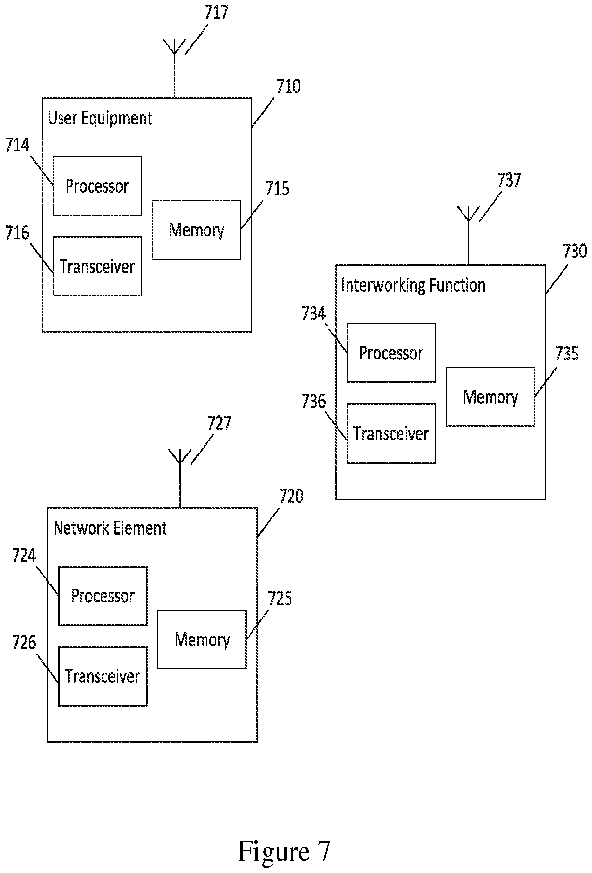

Figure 7 illustrates a system according to certain embodiments of the invention. In one embodiment, a system may include multiple devices, such as, for example, user equipment 710, network element 720, and interworking function 730. The network element can be any of the network elements illustrated or discussed herein, such as an MME, SGSN, HSS or SCS. Each of these devices may include at least one processor, respectively indicated as 714, 724, and 734. At least one memory is provided in each device, and indicated as 715, 725, and 735, respectively. The memory may include computer program instructions or computer code contained therein. Transceivers 716, 726, and 736 are provided, and each device may also include an antenna, respectively illustrated as 717, 727, and 737. Other configurations of these devices, for example, may be provided. For example, user equipment 710, network element 720, and interworking function 730 may be configured for wired communication, rather than wireless communication, and in such a case antennas 717, 727, and 737 would illustrate any form of communication hardware, without requiring a conventional antenna.

Transceivers 716, 726, and 736 can each, independently, be a transmitter, a receiver, or both a transmitter and a receiver, or a unit or device that is configured both for transmission and reception.

Processors 714, 724, and 734 can be embodied by any computational or data processing device, such as a central processing unit (CPU), application specific integrated circuit (ASIC), or comparable device. The processors can be implemented as a single controller, or a plurality of controllers or processors.

Memories 715, 725, and 735 can independently be any suitable storage device, such as a non-transitory computer-readable medium. A hard disk drive (HDD), random access memory (RAM), flash memory, or other suitable memory can be used. The memories can be combined on a single integrated circuit as the processor, or may be separate therefrom. Furthermore, the computer program instructions stored in the memory and which may be processed by the processors can be any suitable form of computer program code, for example, a compiled or interpreted computer program written in any suitable programming language.

The memory and the computer program instructions can be configured, with the processor for the particular device, to cause a hardware apparatus such as user equipment 710, network element 720, and interworking function 730, to perform any of the processes described above (see, for example, Figures 3-6). Therefore, in certain embodiments, a non-transitory computer-readable medium can be encoded with computer instructions that, when executed in hardware, perform a process such as one of the processes described herein. Alternatively, certain embodiments of the invention can be performed entirely in hardware.

Furthermore, although Figure 7 illustrates a system including a user equipment, network element, and interworking function, embodiments of the invention may be applicable to other configurations, and configurations involving additional elements, as illustrated herein. As well, as mentioned above, it is not strictly necessary that an interworking function be included.

Certain embodiments may have various benefits. For example, certain embodiments may replace traditional manual provisioning of groups with automatic provisioning, which may save significant amount of labor cost (in general saves OPEX). Certain embodiments may be particularly beneficial and required for public safety user groups. Certain embodiments may enable automated grouping based on service provider or application running in the device dynamically. Moreover, certain embodiments can be applied to any 3GPP (LTE, GERAN, UTRAN) or 3GPP2 access technologies. Furthermore, certain approaches described herein can be extended to any packet switched (PS) only device, such as dongles, smart meters, smart phones, and/or devices with AC 11 - 15.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention. In order to determine the metes and bounds of the invention, therefore, reference should be made to the appended claims.

### Glossary

IMSI - International Mobile Subscriber Identity
M2M, MTC - Machine Type Communication
OA&M - Operation, Administration and Maintenance
SIMTC - System Improvements for Machine Type Communication
(3GPP Rel-11 work item)
SCS - Services Capability Server
IWF - Interworking Function
V-IWF - Visited network interworking function
H-IWF - Home network interworking function
Ext ID - External Identifier (could be NAI, URI or FQDN)
UE - User Equipment
PLMN - Public Land Mobile Network
FQDN - Fully Qualified Domain Name
DNS - Domain Name System
MNC - Mobile Network Code
MCC - Mobile Country Code
AS - Application Server
MSB - Most Significant Bit
LSB - Least Significant Bit

## Claims

1. A method, comprising:
triggering (610) dynamic grouping of a user equipment to a group by associating the user equipment with a group identifier of the group by the user equipment itself, by a services capability server or by an application server as a result of the user equipment initiating an attach procedure with a network, wherein
the group identifier comprises from among a unique group identifier and a shared identifier at least the unique group identifier, wherein the unique group identifier comprises a combination of an application identifier and a domain identifier,
the triggering is configured to trigger a network element to perform (640) the dynamic grouping of the user equipment in which the user equipment is provisioned in the network element as a member of the group, and
the dynamic grouping is based on at least one of a provided group identifier, a determination of whether a group suitable for the user equipment is already in existence, an application identifier of an application running in the user equipment, a service provider identifier, at least one feature to which a user of the user equipment is subscribed, a location of the user equipment, and at least one feature that the user equipment supports.

2. The method of claim 1, wherein the triggering comprises explicit triggering by sending the group identifier from the user equipment or the services capability server.

3. The method of claim 1, wherein the triggering comprises implicit triggering by sending a list of supported features or supported applications.

4. The method of claim 1, further comprising:
notifying (620) the user equipment of an external identifier corresponding to the group by a services capabilities server.

5. A method, comprising:
a network element receiving (630) a trigger provided by a user equipment, a services capability server, or an application server to perform dynamic grouping of the user equipment by associating the user equipment with a group identifier of the group as a result of the user equipment initiating an attach procedure with a network;
dynamically grouping (640) the user equipment to a group in response to the trigger in which the user equipment is provisioned in the network element as a member of the group,
wherein the dynamically grouping is based on at least one of a provided group identifier, a determination of whether a group suitable for the user equipment is already in existence, an application identifier of an application running in the user equipment, a service provider identifier, at least one feature to which a user of the user equipment is subscribed, a location of the user equipment, and at least one feature that the user equipment supports; and
generating (670) a group identifier for the user equipment of the group,
wherein the group identifier comprises from among a unique group identifier and a shared identifier at least the unique group identifier, wherein the unique group identifier comprises a combination of an application identifier and a domain identifier.

6. The method of claim 5, wherein the dynamically grouping (640) is performed by an interworking function or a home subscriber server.

7. The method of claim 5, further comprising:
mapping (650) the group to an external identifier.

8. The method of claim 7, further comprising:
notifying (660) at least one of an interworking function or a services capabilities server regarding the mapping.

9. The method of claim 5, wherein the shared identifier comprises at least one of a temporary mobile subscriber identity having modified semantics, an enhanced temporary mobile subscriber identity, a new shared identifier, or a shared globally unique temporary identifier that comprises shared space.

10. An apparatus (710; 720), comprising:
triggering means (714; 724) for triggering dynamic grouping of a user equipment (710) to a group by associating the user equipment with a group identifier of the group by the user equipment itself, by a services capability server (720), or by an application server as a result of the user equipment initiating an attach procedure with a network, wherein
the group identifier comprises from among a unique group identifier and a shared identifier at least the unique group identifier, wherein the unique group identifier comprises a combination of an application identifier and a domain identifier,
the triggering is configured to trigger a network element (730) to perform the dynamic grouping of the user equipment in which the user equipment is provisioned in the network element as a member of the group, and
the dynamic grouping is based on at least one of a provided group identifier, a determination of whether a group suitable for the user equipment is already in existence, an application identifier of an application running in the user equipment, a service provider identifier, at least one feature to which a user of the user equipment is subscribed, a location of the user equipment, and at least one feature that the user equipment supports.

11. An apparatus (720), comprising:
receiving means (727) for receiving a trigger provided by a user equipment, a services capability server, or an application server to perform dynamic grouping of the user equipment (710) by associating the user equipment with a group identifier of the group as a result of the user equipment initiating an attach procedure with a network,
wherein the group identifier comprises from among a unique group identifier and a shared identifier at least the unique group identifier;
grouping means (724) for dynamically grouping the user equipment to a group in response to the trigger in which the user equipment is provisioned in the network element as a member of the group,
wherein the dynamically grouping is based on at least one of a provided group identifier, a determination of whether a group suitable for the user equipment is already in existence, an application identifier of an application running in the user equipment, a service provider identifier, at least one feature to which a user of the user equipment is subscribed, a location of the user equipment, and at least one feature that the user equipment supports; and
generating means for generating the group identifier for the user equipment of the group,
wherein the group identifier comprises a unique group identifier, wherein the unique group identifier comprises a combination of an application identifier and a domain identifier.

12. A non-transitory computer-readable medium having stored thereon software instructions that, when executed by a processor, cause the processor to perform a process, the process comprising the method according to any of claims 1-9.

## Patentansprüche

1. Ein Verfahren mit:
Auslösen (610) eines dynamischen Gruppierens eines Benutzergeräts in einer Gruppe durch Assoziieren des Benutzergeräts mit einer Gruppenkennung der Gruppe durch das Benutzergerät selbst, durch einen Servicefähigkeitsserver oder durch einen Anwendungsserver als Ergebnis der Einleitung einer Anmeldeprozedur auf einem Netzwerk durch das Benutzergerät, wobei
die Gruppenkennung aus einer Auswahl von eindeutiger Gruppenkennung und gemeinsam nutzbarer Kennung mindestens die eindeutige Gruppenkennung aufweist, wobei die eindeutige Gruppenkennung eine Kombination aus einer Anwendungskennung und einer Domainkennung ist,
das Auslösen so konfiguriert ist, dass ein Netzwerkelement das Ausführen (640) des dynamischen Gruppierens des Benutzergeräts auslöst, bei dem das Benutzergerät im Netzwerkelement als Mitglied der Gruppe bereitgestellt wird, und
das dynamische Gruppieren mindestens auf einer der bereitgestellten Gruppenkennungen, einer Festlegung dessen, ob eine für das Benutzergerät geeignete Gruppe bereits existiert, einer Anwendungskennung einer auf dem Benutzergerät ausgeführten Anwendung, einer Dienstanbieterkennung, mindestens einer Funktion, die ein Benutzer des Benutzergeräts abonniert hat, einem Standort des Benutzergeräts und mindestens einer Funktion, die das Benutzergerät unterstützt, basiert.

2. Das Verfahren nach Anspruch 1, wobei das Auslösen ein explizites Auslösen durch Senden der Gruppenkennung über das Benutzergerät oder den Servicefähigkeitsserver umfasst.

3. Das Verfahren nach Anspruch 1, wobei das Auslösen ein explizites Auslösen durch Senden einer Liste von unterstützten Funktionen oder unterstützten Anwendungen umfasst.

4. Das Verfahren nach Anspruch 1, das weiter umfasst:
Benachrichtigen (620) des Benutzergeräts über eine externe Kennung der Gruppe durch einen Servicefähigkeitsserver.

5. Ein Verfahren mit:
einem Netzwerkelement mit Empfangen (630) eines Auslösesignals durch ein Benutzergerät, einen Servicefähigkeitsserver oder einen Anwendungsserver zum Ausführen eines dynamischen Gruppierens des Benutzergeräts durch Assoziieren des Benutzergeräts mit einer Gruppenkennung der Gruppe als Ergebnis der Einleitung der Anmeldeprozedur auf einem Netzwerk durch das Benutzergerät;
dynamischem Gruppieren (640) des Benutzergeräts in einer Gruppe als Reaktion auf das Auslösesignal, bei dem das Benutzergerät im Netzwerkelement als Mitglied der Gruppe bereitgestellt wird,
wobei das dynamische Gruppieren mindestens auf einer der bereitgestellten Gruppenkennungen, einer Festlegung dessen, ob eine für das Benutzergerät geeignete Gruppe bereits existiert, einer Anwendungskennung einer auf dem Benutzergerät ausgeführten Anwendung, einer Dienstanbieterkennung, mindestens einer Funktion, die ein Benutzer des Benutzergeräts abonniert hat, einem Standort des Benutzergeräts und mindestens einer Funktion, die das Benutzergerät unterstützt, basiert; und
Generieren (670) einer Gruppenkennung für das Benutzergerät der Gruppe,
wobei die Gruppenkennung aus einer Auswahl von eindeutiger Gruppenkennung und gemeinsam nutzbarer Kennung mindestens die eindeutige Gruppenkennung aufweist, wobei die eindeutige Gruppenkennung eine Kombination aus einer Anwendungskennung und einer Domainkennung ist.

6. Das Verfahren nach Anspruch 5, wobei das dynamische Gruppieren (640) durch eine Zusammenarbeitsfunktion oder einen Heimteilnehmerserver ausgeführt wird.

7. Das Verfahren nach Anspruch 5, das weiter umfasst:
Mapping (650) der Gruppe auf eine externe Kennung.

8. Das Verfahren nach Anspruch 7, das weiter umfasst:
Benachrichtigen (660) mindestens einer Zusammenarbeitsfunktion oder eines Servicefähigkeitsservers über das Mapping.

9. Das Verfahren nach Anspruch 5, wobei die gemeinsam nutzbaren Kennung mindestens eine temporäre Mobilfunkteilnehmerkennung mit modifizierter Semantik, eine verstärkte temporäre Mobilfunkteilnehmerkennung, eine neue gemeinsam nutzbare Kennung oder eine gemeinsam nutzbare, globale eindeutige temporäre Kennung mit einem gemeinsam nutzbaren Bereich umfasst.

10. Eine Vorrichtung (710; 720) mit:
Auslösemitteln (714; 724) zum Auslösen eines dynamischen Gruppierens eines Benutzergeräts (710) in einer Gruppe durch Assoziieren des Benutzergeräts mit einer Gruppenkennung der Gruppe durch das Benutzergerät selbst, durch einen Servicefähigkeitsserver (720) oder durch einen Anwendungsserver als Ergebnis der Einleitung einer Anmeldeprozedur auf einem Netzwerk durch das Benutzergerät, wobei
die Gruppenkennung aus einer Auswahl von eindeutiger Gruppenkennung und gemeinsam nutzbarer Kennung mindestens die eindeutige Gruppenkennung aufweist, wobei die eindeutige Gruppenkennung eine Kombination aus einer Anwendungskennung und einer Domainkennung ist,
das Auslösen so konfiguriert ist, dass ein Netzwerkelement (730) das Ausführen des dynamischen Gruppierens des Benutzergeräts auslöst, bei dem das Benutzergerät im Netzwerkelement als Mitglied der Gruppe bereitgestellt wird, und
das dynamische Gruppieren mindestens auf einer der bereitgestellten Gruppenkennungen, einer Festlegung dessen, ob eine für das Benutzergerät geeignete Gruppe bereits existiert, einer Anwendungskennung einer auf dem Benutzergerät ausgeführten Anwendung, einer Dienstanbieterkennung, mindestens einer Funktion, die ein Benutzer des Benutzergeräts abonniert hat, einem Standort des Benutzergeräts und mindestens einer Funktion, die das Benutzergerät unterstützt, basiert.

11. Eine Vorrichtung (720) mit:
Empfangsmitteln (727) zum Empfangen eines Auslösesignals durch ein Benutzergerät, einen Servicefähigkeitsserver oder einen Anwendungsserver zum Ausführen eines dynamischen Gruppierens des Benutzergeräts (710) durch Assoziieren des Benutzergeräts mit einer Gruppenkennung der Gruppe als Ergebnis der Einleitung einer Anmeldeprozedur auf einem Netzwerk durch das Benutzergerät,
wobei die Gruppenkennung aus einer Auswahl von eindeutiger Gruppenkennung und gemeinsam nutzbarer Kennung mindestens die eindeutige Gruppenkennung aufweist;
Gruppierungsmitteln (724) zum dynamischen Gruppieren des Benutzergeräts in einer Gruppe als Reaktion auf das Auslösesignal, bei dem das Benutzergerät im Netzwerkelement als Mitglied der Gruppe bereitgestellt wird,
wobei das dynamische Gruppieren mindestens auf einer der bereitgestellten Gruppenkennungen, einer Festlegung dessen, ob eine für das Benutzergerät geeignete Gruppe bereits existiert, einer Anwendungskennung einer auf dem Benutzergerät ausgeführten Anwendung, einer Dienstanbieterkennung, mindestens einer Funktion, die ein Benutzer des Benutzergeräts abonniert hat, einem Standort des Benutzergeräts und mindestens einer Funktion, die das Benutzergerät unterstützt, basiert; und
Generierungsmitteln zum Generieren einer Gruppenkennung für das Benutzergerät der Gruppe,
wobei die Gruppenkennung eine eindeutige Gruppenkennung aufweist, wobei die eindeutige Gruppenkennung eine Kombination aus einer Anwendungskennung und einer Domainkennung ist.

12. Eine nichttransitorisches computerlesbares Medium, auf dem Software-Befehle gespeichert sind, die, bei deren Ausführung durch einen Prozessor, den Prozessor veranlassen, einen Prozess auszuführen, wobei der Prozess das Verfahren nach einem beliebigen der Ansprüche 1 bis 9 umfasst.

## Revendications

1. Procédé comprenant les étapes suivantes :
déclencher (610) le rattachement dynamique d'un équipement d'utilisateur à un groupe en associant l'équipement d'utilisateur à un identificateur de groupe du groupe, au moyen de l'équipement d'utilisateur lui-même, au moyen d'un serveur de capacités de service ou au moyen d'un serveur d'applications, en conséquence du lancement par l'équipement d'utilisateur d'une procédure de rattachement à un réseau, dans lequel :
l'identificateur de groupe comprend parmi un identificateur unique de groupe et un identificateur partagé, au moins l'identificateur unique de groupe, dans lequel l'identificateur unique de groupe comprend une combinaison d'un identificateur d'application et d'un identificateur de domaine,
le déclenchement est conçu pour déclencher la réalisation (640), par un élément de réseau, du rattachement dynamique de l'équipement d'utilisateur à un groupe, dans lequel l'équipement d'utilisateur est provisionné dans l'élément de réseau en tant que membre du groupe, et
le rattachement dynamique à groupe est fondé sur un identificateur de groupe fourni et/ou la détermination de ce qu'il existe déjà ou non un groupe approprié pour l'équipement d'utilisateur et/ou un identificateur d'application d'une application s'exécutant dans l'équipement d'utilisateur et/ou un identificateur de fournisseur de service et/ou au moins une fonction à laquelle est abonné un utilisateur de l'équipement d'utilisateur et/ou un emplacement de l'équipement d'utilisateur et/ou au moins une fonction que prend en charge l'équipement d'utilisateur.

2. Procédé selon la revendication 1, dans lequel le déclenchement comprend un déclenchement explicite par envoi de l'identificateur de groupe par l'équipement d'utilisateur ou le serveur de capacités de service.

3. Procédé selon la revendication 1, dans lequel le déclenchement comprend un déclenchement implicite par envoi d'une liste de fonctions prises en charge ou d'applications prises en charge.

4. Procédé selon la revendication 1, comprenant en outre l'étape suivante :
notifier (620) à l'équipement d'utilisateur un identificateur externe correspondant au groupe, au moyen d'un serveur de capacités de service.

5. Procédé comprenant les étapes suivantes :
recevoir (630), au moyen d'un élément de réseau, un déclenchement fourni par un équipement d'utilisateur, un serveur de capacités de service ou un serveur d'applications pour réaliser un rattachement dynamique de l'équipement d'utilisateur à un groupe en associant l'équipement d'utilisateur à un identificateur de groupe du groupe, en conséquence du lancement par l'équipement d'utilisateur d'une procédure de rattachement à un réseau ;
rattacher dynamiquement (640) l'équipement d'utilisateur à un groupe, en réponse au déclenchement, dans lequel l'équipement d'utilisateur est provisionné dans l'élément de réseau en tant que membre du groupe,
dans lequel le rattachement dynamique à un groupe est fondé sur un identificateur de groupe fourni et/ou la détermination de ce qu'il existe déjà ou non un groupe approprié pour l'équipement d'utilisateur et/ou un identificateur d'application d'une application s'exécutant dans l'équipement d'utilisateur et/ou un identificateur de fournisseur de service et/ou au moins une fonction à laquelle est abonné un utilisateur de l'équipement d'utilisateur et/ou un emplacement de l'équipement d'utilisateur et/ou au moins une fonction que prend en charge l'équipement d'utilisateur ; et
créer (670) un identificateur de groupe pour l'équipement d'utilisateur du groupe,
dans lequel l'identificateur de groupe comprend parmi un identificateur unique de groupe et un identificateur partagé, au moins l'identificateur unique de groupe, dans lequel l'identificateur unique de groupe comprend une combinaison d'un identificateur d'application et d'un identificateur de domaine.

6. Procédé selon la revendication 5, dans lequel le rattachement dynamique à un groupe (640) est réalisé par une fonction d'interfonctionnement ou un serveur d'abonné résidentiel.

7. Procédé selon la revendication 5, comprenant en outre l'étape suivante :
mapper (650) le groupe sur un identificateur externe.

8. Procédé selon la revendication 7, comprenant en outre l'étape suivante :
notifier (660) le mappage à une fonction d'interfonctionnement et/ou à un serveur de capacités de service.

9. Procédé selon la revendication 5, dans lequel l'identificateur partagé comprend une identité temporaire d'abonné mobile ayant une sémantique modifiée et/ou une identité temporaire améliorée d'abonné mobile et/ou un nouvel identificateur partagé et/ou un identificateur temporaire partagé unique à l'échelle mondiale qui comprend un espace partagé.

10. Appareil (710 ; 720) comprenant :
un moyen de déclenchement (714 ; 724) destiné à déclencher le rattachement dynamique d'un équipement d'utilisateur (710) à un groupe en associant l'équipement d'utilisateur à un identificateur de groupe du groupe, au moyen de l'équipement d'utilisateur lui-même, au moyen d'un serveur de capacités de service (720) ou au moyen d'un serveur d'applications, en conséquence du lancement par l'équipement d'utilisateur d'une procédure de rattachement à un réseau, dans lequel :
l'identificateur de groupe comprend parmi un identificateur unique de groupe et un identificateur partagé, au moins l'identificateur unique de groupe, dans lequel l'identificateur unique de groupe comprend une combinaison d'un identificateur d'application et d'un identificateur de domaine,
le déclenchement est conçu pour déclencher la réalisation par un élément de réseau (730) du rattachement dynamique de l'équipement d'utilisateur à un groupe, dans lequel l'équipement d'utilisateur est provisionné dans l'élément de réseau en tant que membre du groupe, et
le rattachement dynamique à un groupe est fondé sur un identificateur de groupe fourni et/ou la détermination de ce qu'il existe déjà ou non un groupe approprié pour l'équipement d'utilisateur et/ou un identificateur d'application d'une application s'exécutant dans l'équipement d'utilisateur et/ou un identificateur de fournisseur de service et/ou au moins une fonction à laquelle est abonné un utilisateur de l'équipement d'utilisateur et/ou un emplacement de l'équipement d'utilisateur et/ou au moins une fonction que prend en charge l'équipement d'utilisateur.

11. Appareil (720) comprenant :
un moyen de réception (727) destiné à recevoir un déclenchement fourni par un équipement d'utilisateur, un serveur de capacités de service ou un serveur d'applications pour réaliser un rattachement dynamique de l'équipement d'utilisateur (710) à un groupe en associant l'équipement d'utilisateur à un identificateur de groupe du groupe, en conséquence du lancement par l'équipement d'utilisateur d'une procédure de rattachement à un réseau,
dans lequel l'identificateur de groupe comprend, parmi un identificateur unique de groupe et un identificateur partagé, au moins l'identificateur unique de groupe ;
un moyen de rattachement à un groupe (724) destiné à rattacher dynamiquement l'équipement d'utilisateur à un groupe, en réponse au déclenchement, dans lequel l'équipement d'utilisateur est provisionné dans l'élément de réseau en tant que membre du groupe,
dans lequel le rattachement dynamique à un groupe est fondé sur un identificateur de groupe fourni et/ou la détermination de ce qu'il existe déjà ou non un groupe approprié pour l'équipement d'utilisateur et/ou un identificateur d'application d'une application s'exécutant dans l'équipement d'utilisateur et/ou un identificateur de fournisseur de service et/ou au moins une fonction à laquelle est abonné un utilisateur de l'équipement d'utilisateur et/ou un emplacement de l'équipement d'utilisateur et/ou au moins une fonction que prend en charge l'équipement d'utilisateur ; et
un moyen de génération destiné à créer l'identificateur de groupe pour l'équipement d'utilisateur du groupe,
dans lequel l'identificateur de groupe comprend un identificateur unique de groupe, dans lequel l'identificateur unique de groupe comprend une combinaison d'un identificateur d'application et d'un identificateur de domaine.

12. Support non transitoire lisible par ordinateur, sur lequel sont stockées des instructions logicielles qui, lorsqu'elles sont exécutées par un processeur, font réaliser un processus au processeur, le processus comprenant le procédé selon l'une quelconque des revendications 1 à 9.
